# EUROPEAN PATENT SPECIFICATION

(11) **EP 2 303 613 B1**
(45) Date of publication and mention of the grant of the patent: **12.11.2014**
(21) Application number: 09784850.1
(22) Date of filing: 03.08.2009
(51) Int. Cl.: B60G 17/015

(54) **METHOD OF MONITORING A VEHICLE AND APPARATUS THEREFOR**
VERFAHREN ZUR ÜBERWACHUNG EINES FAHRZEUGS UND VORRICHTUNG DAFÜR
PROCÉDÉ DE SURVEILLANCE D UN VÉHICULE ET APPAREIL CORRESPONDANT

(30) Priority: 01.08.2008 GB 0814078
(43) Date of publication of application: 06.04.2011
(73) Proprietor: Haldex Brake Products Limited, Lindley, Warwickshire CV13 6DE (GB); BPW Bergische Achsen Kommanditgesellschaft, 51674 Wiehl (DE)
(72) Inventor: MANZ, Stefan, 51674 Wiehl (DE); MOOG, Reiner, 51588 Nümbrecht (DE); HARRISON, Dudley, Birmingham B27 7AB (GB); MUNSLOW, Wayne, Worcestershire B98 9HA (GB)
(74) Representative: Lawson, Alison Christina
(86) International application number: PCT/GB2009/001902
(87) International publication number: WO 2010/013019

(56) References cited:
- EP-A2- 0 832 770
- WO-A1-01/70549
- JP-A- 3 258 607
- JP-A- 4 118 310
- JP-A- 5 221 211
- JP-A- 59 196 402
- JP-A- 62 244 707
- JP-A- 63 106 131
- JP-A- 2006 327 434
- KR-A- 20070 060 852
- US-A- 4 672 547
- US-A- 4 837 727
- US-A- 4 936 604
- US-A1- 2003 065 435
- US-A1- 2003 088 355

## Description

### Description of Invention

The present invention relates to a method of monitoring a vehicle and to vehicle monitoring apparatus and system particularly but not exclusively for heavy goods vehicles.

Vehicle axles and suspension systems, particularly for heavy goods vehicles, are designed to achieve a desired level of durability for the intended use of the vehicle. For example, the axles of a vehicle intended for road use are typically lighter than the axles used in a vehicle intended for off-road use, for example a tipping vehicle which may have to enter and drive around a quarry or construction site. It follows, therefore, that if a vehicle is used in applications for which it was not intended to be used, for example, if a road vehicle is driven off-road, one or more of the axles may fail sooner than anticipated. At present, a vehicle manufacturer or owner of a large fleet of vehicles is unlikely to become aware that a vehicle has been used in this way until the vehicle fails prematurely and an examination and analysis of the failed components is carried out.

US 4,837,727 discloses a method of monitoring a vehicle using a wheel speed sensor to detect changes in the speed of the vehicle. The output of the rotary sensor is converted to a waveform, the variation in the frequency of the waveform is calculated and this variation used to assess the condition of the road over which the vehicle has travelled.

According to a first aspect of the invention, we provide a method of monitoring a vehicle using a sensor to measure a parameter which depends on the forces acting on the vehicle generally normal to the surface over which the vehicle is travelling, the sensor being a pressure sensor or a distance sensor or accelerometer, transmitting a signal from the sensor to a processing apparatus (16) at periodic intervals, the processing apparatus processing a plurality of said signals to determine a value indicative of the cumulative forces acting on the vehicle generally normal to the surface over which the vehicle is travelling over a specified period of time, characterised in that the method further includes the steps of processing said signal into a force signal and assigning each force signal to one of a plurality of bands, each of the bands being defined by a different range of force values, and for each force signal determined, incrementing a counter (RCC) by a different amount according the band to which the force signal is assigned, the counter (RCC) providing an indication of the terrain over which the vehicle has travelled.

The said value may therefore be used to provide an indication of the type or condition of the terrain over which the vehicle has travelled which may be used in making an assessment as to whether any suspension component or axle of the vehicle is likely to fail prematurely.

Where the vehicle includes a suspension system, the force signal preferably comprises a suspension deflection signal representing the deflection of the vehicle suspension relative to a chassis of the vehicle. In this case, where the suspension system comprises at least one fluid spring, the suspension deflection signals may be derived from a measure of the pressure of fluid in the fluid spring.

The method may further include the steps of using a vehicle speed signal to determine if the vehicle is stationary, and using a suspension deflection signal produced when the vehicle is stationary to determine a static suspension deflection value. In this case the method may include the steps of using a plurality of suspension deflection signals produced when the vehicle is stationary and processing the plurality of signals, for example by determining an average signal value, to determine the static suspension deflection value. Alternatively, the static suspension deflection value may be determined by processing the suspension deflection signal produced whilst the vehicle is in motion.

Where the vehicle is provided with an accelerometer capable of measuring the acceleration of the vehicle in the direction generally normal to the surface over which the vehicle is travelling, the force signal may be provided by the accelerometer and comprise the acceleration of the vehicle generally normal to the surface over which the vehicle is travelling.

Preferably the method also includes the steps of using a vehicle speed signal to determine if the vehicle is in motion, and processing each force signal taken at predetermined time intervals whilst the vehicle is in motion. In this case, where the force signal is derived from a suspension deflection signal, the method may include processing each suspension deflection signal and the static suspension deflection value to determine a relative suspension deflection value, the relative suspension deflection value being the magnitude of the difference between the suspension deflection value and the static suspension deflection value. Alternatively, the relative suspension value may be the magnitude of the difference between the suspension deflection value and the static suspension deflection value as a percentage of the static suspension deflection value.

Preferably no steps are taken to increase the value indicative of the forces acting on the vehicle generally normal to the surface over which the vehicle is travelling when either the vehicle loading is below a predetermined level, or the vehicle is braking.

According to a second aspect of the invention we provide an electronic processing apparatus for a vehicle, the electronic processing apparatus having processing means, a storage memory and an input for receiving a first input signal from a sensor, the sensor being a pressure sensor or a distance sensor or an accelerometer, the first input signal representing a measured value of a parameter which depends on the force acting on the vehicle generally normal to the surface over which the vehicle is travelling, wherein the electronic processing apparatus is configured to process the first input signal taken at periodic intervals during operation of the vehicle and derive therefrom a value indicative of cumulative forces acting on the vehicle generally normal to the surface over which the vehicle is travelling during a specific period of time, characterised in that the electronic processing apparatus is further configured to process said first input signal into a force signal and assign each force signal to one of a plurality of bands, each of the bands being defined by a different range of force values, and for each force signal determined, incrementing a counter (RCC) by a different amount according the band to which the force signal is assigned, the counter (RCC) providing a value indicative of terrain over which the vehicle has travelled.

The first input signal may represent the deflection of the suspension relative to a chassis of the vehicle. Alternatively, the first input signal may represent the acceleration of the vehicle generally normal to the surface over which the vehicle is travelling.

Where the first input signal represents the deflection of the suspension, the electronic processing apparatus may be operable to process the first input signal whilst the vehicle is in motion to determine a static suspension deflection signal representative of the suspension deflection when the vehicle is stationary.

The electronic processing apparatus may further include a second input for a second input signal representing the speed of the vehicle. In this case, the electronic processing apparatus may be capable of using the second input signal to determine if the vehicle is moving, and is configured to process the first input signal at periodic intervals to determine the value only when the vehicle is moving.

Furthermore, where the first input signal presents the deflection of the vehicle suspension, the electronic processing apparatus may be capable of using the second input signal to determine when the vehicle is stationary, recording the first input signal when the vehicle is stationary and designating this as the static suspension deflection signal. The electronic processing apparatus maybe operable to use the static suspension deflection signal and the first input signal at any one time to determine a value representative of the deflection of the suspension from a neutral position achieved when the vehicle is stationary.

According to a third aspect of the invention we provide vehicle suspension assembly including an axle, a suspension element for support a vehicle chassis on the axle, and an electronic processing apparatus according to the second aspect of the invention.

The first input signal may comprise a signal representing the deflection of the suspension element. Moreover, the suspension element may comprise a fluid spring, and the assembly further include a pressure sensor which is arranged to provide the electronic processing apparatus as the first input signal a signal representing the pressure of fluid in the fluid spring.

Alternatively, the assembly may include an accelerometer which is arranged to provide the electronic processing apparatus as the first input signal a signal representing an acceleration of the accelerometer.

The assembly may further include a brake and a brake actuator, the electronic processing apparatus having an output for a brake operating signal by means of which operation of the brake actuator may be controlled.

One embodiment of the invention will now be described, by way of example only, and with reference to the accompanying drawings of which,
FIGURE 1 shows a schematic illustration of a vehicle fitted with a vehicle monitoring apparatus according to the second aspect of the invention, and
FIGURE 2 is a flow chart illustrating the RRC algorithm of the method according to the first aspect of the invention.

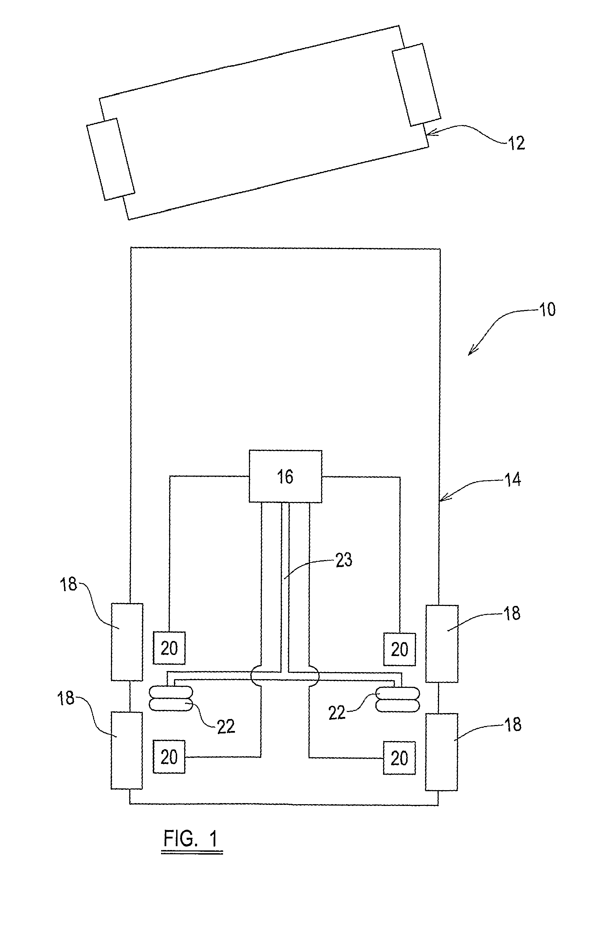

Referring now to Figure 1, there is shown a heavy goods vehicle 10 comprising a tractor 12 and a semi-trailer 14. The semi-trailer 14 has a plurality of wheels 18 each of which is fitted with a brake which is controlled using a conventional braking system with anti-lock braking functionality (ABS). The brakes may be pneumatically or hydraulically operated, or the trailer may have a completely electronic braking control system (EBS).

The semi-trailer 14 is fitted with an electronic processing apparatus 16, which, in this example is the main braking electronic control unit (ECU). Where the braking system is pneumatically or hydraulically operated, the ECU 16 provides the electronic braking control intervention required for the ABS, whilst where the trailer 14 is provided with EBS, the ECU 16 provides the electronic braking control for the EBS and ABS. In order to provide anti-lock braking control intervention, a wheel speed sensor 20 is provided at each of the trailer wheels 18, and, as with all conventional ABS or EBS ECU's, the ECU 16 is provided with an input to receive a wheel speed signal from each wheel speed sensor 20.

The ECU 16 is provided with a random access memory (RAM) and a non-volatile memory, for example comprising an EEPROM.

The semi-trailer 14 is also fitted with a conventional air suspension system in which the vehicle chassis is supported on a plurality of air springs 22. In this example, the air springs 22 are connected to a pneumatic line 23 which extends to a pressure input at the ECU 16. The ECU 16 is provided with a pressure transducer to provide an electrical signal indicative of the air pressure in the line 23, and hence the pressure in the air springs 22. In an alternative embodiment of the invention, each of the air springs 22 is provided with a pressure sensor to sense the air pressure in the spring 22, and the ECU 16 is provided with an input to receive an electrical pressure signal from the pressure sensor.

It will be appreciated that the air pressure in the air springs 22 will depend on the vehicle loading - the greater the weight placed on the vehicle chassis, the higher the pressure, and therefore this pressure signal provides a measure of the vehicle loading. Such a pressure signal is typically used in electronic braking control to determine the vehicle load to set an appropriate braking pressure to meet the deceleration requirements of the driver according to vehicle loading.

Whilst in this example the trailer 14 is provided with a plurality of wheel speed sensors and suspension sensors, and the ECU 16 is programmed to determine an average wheel speed or average suspension pressure from the signals received from each sensor, the invention could be performed using a wheel speed signal from only one wheel speed sensor, and a suspension pressure signal from a single pressure sensor.

It will be appreciated that when the vehicle is stationary, the suspension pressure will be generally constant and determined by the weight of the semi-trailer body and the trailer load. When the vehicle is in motion, if the vehicle is travelling over a particularly smooth surface, for example on a motorway, the suspension pressure will generally remain at the same level as when the vehicle is stationary. If the vehicle travels over a particularly rough surface, such as a heavily pot-holed road, or onto an off-road site such as a quarry or building site, there will be significant deflections in the suspension. These arise because of generally vertical (or normal to the road surface) forces acting on the vehicle and will manifest as fluctuations in the suspension pressure.

The ECU 16 is programmed to operate as follows.

When the wheel speed sensor 20 indicates that the vehicle 10 is moving, the ECU 16 takes the pressure signal from the pressure sensors at periodic intervals, in this example at a sampling rate of 100Hz, and the average of each pressure reading taken in every one second time period is determined to give the dynamic suspension pressure at that time. Standard filtering techniques are then applied to the dynamic suspension pressure data to separate high frequency fluctuations in suspension pressure arising from road surface irregularities and low frequency fluctuations in suspension pressure arising from vehicle braking or changes in trailer loading during use. By processing the suspension pressure data in this way, the ECU 16 can determine the static suspension pressure, i.e. the value the pressure in the air springs 22 would attain if the vehicle were stationary, at any one time.

Each value of dynamic suspension pressure is then compared with the static suspension pressure, and in this example, assigned into one of four bands.

Where the magnitude of the difference between the dynamic suspension pressure and the static suspension pressure is:
a) less than 10% of the static suspension pressure, the reading is assigned to band 0,
b) from 10% to 15% of the static suspension pressure, the reading is assigned to band 1,
c) from 15% to 20% of the static suspension pressure, the reading is assigned to band 2, and
d) greater than 20% of the static suspension pressure, the reading is assigned to band 3.

The ECU 16 then advances a counter, hereinafter referred to as the "rough road counter" or "RRC", by an amount which depends on the band to which the latest dynamic suspension pressure reading has been assigned. The RRC is set to zero when the ECU 16 is installed, or at the beginning of the desired monitoring period, and, in this example, where the dynamic suspension pressure reading was assigned to:
a) band 0 - the RRC is not changed,
b) band 1 - the RRC is increased by 1,
c) band 2 - the RRC is increased by 2, and
d) band 3 - the RRC is increased by 5.

Each time the RRC is advanced, the new RRC and an indication of the time and/or distance reading from the vehicle odometer at which the RRC was advanced, are stored in the non-volatile memory 16b of the ECU 16.

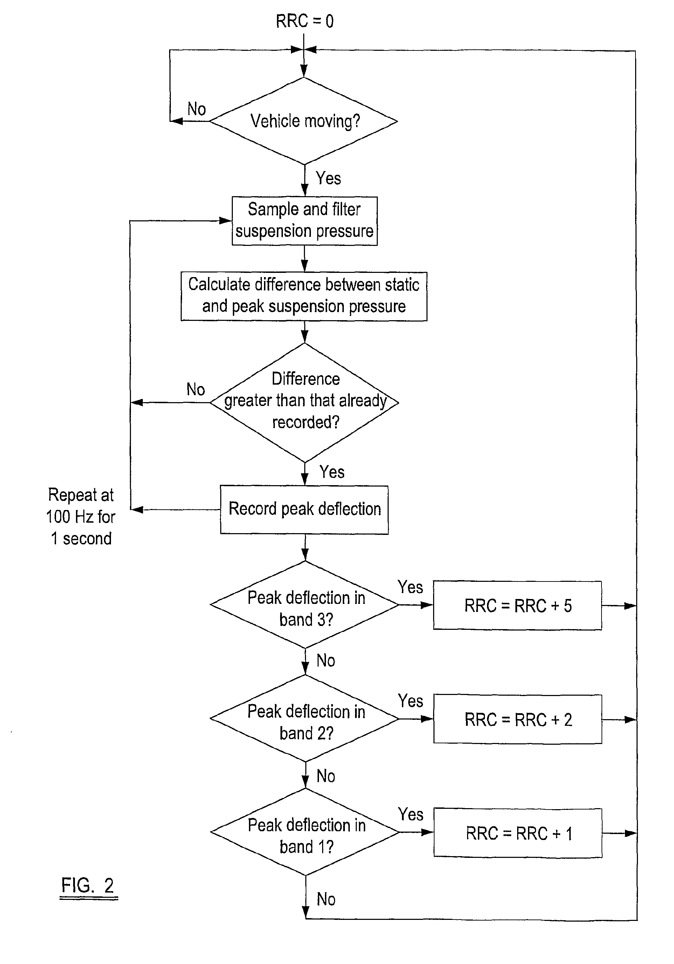

This process, (the RRC algorithm) is illustrated in Figure 2.

Testing shows that the banding and amounts by which the RRC is incremented have been set such that when the vehicle travels along a relatively smooth road such as a motorway, the RRC almost never advances. When the vehicle travels on a secondary road with potholes, drain covers, etc. the RRC advances slowly. Finally, when the vehicle is driven off-road, the RRC advances quickly.

It will be appreciated, however, that more or fewer than four bands could be provided, and the limits assigned to each band need not be as described above, or indeed based on the percentage of the static suspension pressure. For example, the band limits may simply be set according to the magnitude of the difference between the dynamic suspension pressure and the static suspension pressure. Alternatively, the suspension pressure readings may be converted to a force reading, based on knowledge of the suspension pressure at maximum loading and the assumption of a linear relationship between the suspension pressure and the load acting on the suspension, and the band limits based on the magnitude of the load acting on the suspension. The amounts by which the RRC is incremented in each case, may also be varied, depending, for example, on the magnitude of vertical forces the trailer axles and suspension system are designed to withstand.

The vertical forces on the vehicle resulting from travel over an uneven surface are proportional to the static mass of the vehicle. At such, as high levels of trailer loading, these vertical forces are high, and have potential to cause significant damage to the trailer. On the other hand, where the trailer is unloaded or only very lightly loaded, the vertical forces may not be sufficient to cause significant damage.

In a preferred embodiment of the invention, therefore, the ECU 16 is programmed such that the RRC is only changed as described above if the static suspension pressure exceeds a predetermined value, such as a value representing loading of 50% of the maximum trailer load. If the static suspension pressure is below the predetermined value, the RRC is not advanced as described above.

Where the ECU 16 is also the main braking control unit for an EBS, the ECU 16 is provided with an input for a braking demand signal and this can be used to determine when there is braking. In a preferred embodiment of the invention, where the vehicle uses EBS, the ECU 16 is also programmed not to advance the RRC during vehicle braking. This avoids fluctuations in the suspension pressure due to load transfer during braking being attributed to fluctuations caused by road surface irregularities. Alternatively, the ECU 16 may be programmed not to advance the RRC for a short period of time (2 seconds, for example) at the start of braking, when the suspension pressure is rising, and again for a short period (2 seconds, for example) after the end of the braking, when the pressure is falling. In the intervening period during braking the RRC may be advanced as described above on the assumption that oscillation in suspension pressure during that time are still representative of road conditions. If required, any low frequency, low amplitude oscillations caused by variations in the braking level can be ignored, for example by using frequency-based filtering methods or by changing the band limits used in advancing the RRC, or not incrementing the RRC when an oscillation lying within one or more of the lower amplitude bands is detected.

Rather than determine the static suspension pressure by filtering the suspension pressure readings taken during operation of the vehicle, the static suspension pressure may be measured whilst the vehicle is stationary. In this case, when the wheel speed signals are zero, i.e. the vehicle is stationary, and the average pressure detected by the pressure sensors is generally constant, the ECU 16 takes the pressure signal input from the pressure sensor at a plurality of time points calculates the average of these inputs, and designates this as the static suspension pressure.

Ifi should be appreciated that the invention may equally be implemented in a vehicle without air suspension. If the suspension is provided by a plurality of mechanical (e.g. leaf) springs the suspension deflection may be measured using a strain gauge or distance sensor.

In a further alternative embodiment of the invention, the RRC can be calculated on the basis of readings from an accelerometer fitted to the trailer 14. The accelerometer provides a signal input to the ECU 16 indicative of the vertical acceleration of the trailer 14, and, as with the dynamic suspension pressure measurement described above, whilst the vehicle is moving. the vertical acceleration is sampled, in this example at a frequency of 100Hz, and the average vertical acceleration over a 1 second period is determined by the ECU 16. The ECU 16 is programmed then to calculate the dynamic vertical force from the average vertical acceleration and the vehicle load determined from the static suspension pressure. This dynamic vertical force replaces the magnitude of the difference between the dynamic suspension pressure and the static suspension pressure in the calculation of the RRC described above, and the RRC is therefore incremented on the basis of the magnitude of the dynamic vertical force.

This accelerometer based method of calculating the RRC can be used instead of the suspension pressure method described above or the two methods can be used together, and the resulting RRC values cross-checked to improve the accuracy and reliability of the system.

The RRC provides an indication of the terrain over which the vehicle has travelled - the higher the RRC, the rougher the terrain, and the greater the vertical forces to which the trailer has been subjected. Where the ECU 16 is provided with a signal representative of the total distance the vehicle has travelled in its lifetime or at least whilst ECU 16 has been installed on the vehicle 10, or is capable of calculating this value, the RRC can be scaled to the distance travelled, for example to give a value of RRC per mile. By doing this, the RRC data for vehicles of different total mileage can more readily be compared.

Where the band limits in the RRC algorithm are based on the load acting on the vehicle suspension, the RRC also is representative of the cumulative total of the vertical forces endured by the vehicle in its lifetime.

The RRC therefore provides a means whereby the owner of a vehicle can make an assessment as to whether there is a likelihood that an axle or suspension component of the vehicle will fail prematurely because of the terrain on which the vehicle has travelled. For example, the owner of a fleet of vehicles may compare the RRC per mile for all its vehicles, and if any show an unusually high value, could bring the vehicle in for servicing or testing.

The owner may also wish to conduct investigations into whether the vehicle has been used on unsuitable terrains, and, if so, why. If desired, therefore, the owner can use the data saved in the non-volatile memory 16b of the ECU 16 to provide a plot of RRC against time or distance. When the vehicle is travelling over rough terrain when heavily loaded, the RRC will have increased rapidly and the gradient of the RRC versus time or distance plot will be steep. The times at which the vehicle has travelled over rough terrain can be deduced from the RRC against time plot and this information checked with other vehicle logs to determine, for example, who was driving the vehicle at the time. Use of an RRC vs distance plot is particularly advantageous as this takes into consideration the effect of speed variations on the rate of RRC increase.

Alternatively or additionally, a manufacturer of a vehicle may stipulate in the vehicle service instructions that certain checks or tests should be carried on particular axle or suspension components, or these components replaced, when the vehicle reaches a particular RRC value. In this case, the ECU 16 may be programmed to raise an alarm when the RRC reaches the predetermined value. The alarm could be transmitted whilst the vehicle is in use to a remote diagnostic facility using a wireless telematic interface, or may be displayed on a display unit visible to a driver of the vehicle or on a diagnostic display unit next time such a unit is connected to the ECU 16. For a rental vehicle, the alarm may, for example, prompt the lessee to return the vehicle to the lessor for testing or servicing.

The RRC can also be used, not only to provide a record of past vehicle operating conditions, but also to effect particular control functions if a rough road, i.e. a period of increased RRC / time gradient, is detected. For example, where the ECU 16 also controls the operation of a lifting axle, the ECU 16 may be programmed to lowering the lifting axle if the RRC / time gradient exceeds a predetermined amount. Similarly, if the ECU 16 is also capable of controlling the suspension pressure to alter the ride height of the trailer 14, or the damper stiffness of the suspension springs, the ECU 16 may be programmed to increase the ride height or change the damper spring stiffness if the rate of increase of the RRC exceeds a predetermined amount.

For example, the ECU 16 may be programmed to set the vehicle to an off-road state by lowering the lifting axle and/or raising the suspension if the RRC increases by more than 10 in 10 seconds, and to return the vehicle to an on-road state by raising the lifting axle and/or lowering the suspension if the RRC increases by less than 10 in 60 seconds.

It will be appreciated that a plot of the suspension pressure over time could be used to provide an indication of the terrain over which the vehicle has travelled, and therefore to alert an operator or owner of the vehicle when the vehicle has been used in conditions which could cause premature failure of components of the vehicle. As peaks in suspension pressure resulting from the roughness of the terrain over which the vehicle is travelling can occur for relatively small periods of time, in order to ensure that all such peaks are detected, it is necessary to take suspension pressure readings relatively frequently, for example at a sampling frequency of 100Hz. It will be appreciated that over the lifetime of the vehicle an extremely large number of suspension pressure readings will be taken.

If a plot of suspension pressure over time were used to provide a record of the terrain travelled over the lifetime of the vehicle, the volume of data required to do this would be significant, it would be necessary to provide the ECU 16 with an unacceptably large memory to achieve this. Such a plot would also not provide a quantitative assessment of the vehicle condition for use in determining whether the vehicle should be brought in for testing and / or replacement of certain components.

Using the suspension pressure readings in the method described above is particularly advantageous because it provides a quantitative measure of the vehicle condition, and only relatively little memory is required to store the RRC. Furthermore, the invention can be carried out using the components fitted as standard to conventional ABS / EBS systems. No additional physical components are required - only software modification to the ECU16.

It will be appreciated that whilst in the embodiment described above, the vehicle 10 comprises a tractor 12 and a trailer 14, it may equally comprise a tractor and semi-trailer. Similarly, the vehicle need not be articulated, and whilst the invention is particularly advantageous when used in a heavy goods vehicle, as the heavy loading of such vehicles make them particularly susceptible to damage when used in an inappropriate manner, the invention could equally be used in any type of vehicle.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of monitoring a vehicle using a sensor to measure a parameter which depends on the forces acting on the vehicle generally normal to the surface over which the vehicle is travelling, the sensor being a pressure sensor or a distance sensor or accelerometer, transmitting a signal from the sensor to a processing apparatus (16) at periodic intervals, the processing apparatus (16) processing a plurality of said signals to determine a value indicative of the cumulative forces acting on the vehicle generally normal to the surface over which the vehicle is travelling over a specified period of time, **characterised in that** the method further includes the steps of processing said signal into a force signal and assigning each force signal to one of a plurality of bands, each of the bands being defined by a different range of force values, and for each force signal determined incrementing a counter (RCC) by a different amount according the band to which the force signal is assigned, the counter (RCC) providing an indication of the terrain over which the vehicle has travelled.

2. A method according to claim 1 wherein the vehicle includes a suspension system, the signal comprises a suspension deflection signal representing the deflection of a vehicle suspension element relative to a chassis of the vehicle, and the method further includes the steps of using a vehicle speed signal to determine if the vehicle is stationary, and using a suspension deflection signal produced when the vehicle is stationary to determine a static suspension deflection value.

3. A method according to claim 2 wherein the method further includes the steps of processing suspension deflection signals obtained whilst the vehicle is in motion to determine a static suspension deflection value representing the suspension deflection when the vehicle is stationary.

4. A method according to any preceding claim wherein the method also includes the steps of using a vehicle speed signal to determine if the vehicle is in motion, and processing each signal taken at predetermined time intervals whilst the vehicle is in motion.

5. A method according to claim 3 wherein the method includes processing each suspension deflection signal and the static suspension deflection value to determine a relative suspension deflection value, the relative suspension deflection value being the magnitude of the difference between the suspension deflection value and the static suspension deflection value.

6. A method according to claim 1 wherein no steps are taken to increment the counter when either the vehicle loading is below a predetermined level, or the vehicle is braking.

7. An electronic processing apparatus for a vehicle, the electronic processing apparatus having processing means, a storage memory and an input for receiving a first input signal from a sensor, the sensor being a pressure sensor or a distance sensor or an accelerometer, the first input signal representing a measured value of a parameter which depends on the force acting on the vehicle generally normal to the surface over which the vehicle is travelling, wherein the electronic processing apparatus is configured to process the first input signal taken at periodic intervals during operation of the vehicle and derive therefrom a value indicative of cumulative forces acting on the vehicle generally normal to the surface over which the vehicle is travelling during a specific period of time, , **characterised in that** the electronic processing apparatus is further configured to process said first input signal into a force signal and assign each force signal to one of a plurality of bands, each of the bands being defined by a different range of force values, and for each force signal determined, incrementing a counter (RCC) by a different amount according the band to which the force signal is assigned, the counter (RCC) providing a value indicative of terrain over which the vehicle has travelled.

8. An electronic processing apparatus according to claim 7 wherein the first input signal represents the deflection of a vehicle suspension element relative to a chassis of the vehicle, and the apparatus is operable to process the first input signal whilst the vehicle is in motion to determine a static suspension deflection signal representative of the suspension deflection when the vehicle is stationary.

9. An electronic processing apparatus according to any one of claims 7 or 8 wherein the electronic processing apparatus further includes a second input for a second input signal representing the speed of the vehicle, the electronic processing apparatus being capable of using the second input signal to determine if the vehicle is moving, and being configured to process the first input signal at periodic intervals to determine the value only when the vehicle is moving.

10. An electronic processing apparatus according to claim 9 wherein the electronic processing apparatus is capable of using the second input signal to determine when the vehicle is stationary, recording the first input signal when the vehicle is stationary and designating this as the static suspension deflection signal.

11. An electronic processing apparatus according to claim 10 wherein the electronic processing apparatus is configured such that, it uses the static suspension deflection signal and the first input signal at any one time to determine a value representative of the deflection of the suspension from a neutral position achieved when the vehicle is stationary.

12. A vehicle suspension assembly including an axle and a suspension element for supporting a vehicle chassis on the axle, the assembly further including an electronic processing apparatus according to any one of claims 7 to 11.

13. A vehicle suspension assembly according to claim 12 wherein the first input signal comprises a signal representing the deflection of the suspension element relative to the vehicle chassis, and the suspension element comprises a fluid spring, and the assembly further includes a pressure sensor which is connected to the input of the electronic processing apparatus and arranged to provide the electronic processing unit as the first input signal, a signal representative of the pressure of the fluid in the fluid spring.

14. A vehicle suspension assembly according to claim 12 wherein the assembly further includes an accelerometer which is arranged to provide the electronic processing unit, as the first input signal, a signal representative of an acceleration of the accelerometer.

15. A vehicle suspension assembly according to claim 12 or 13 wherein the assembly further includes a brake and a brake actuator, the electronic processing apparatus having an output for a brake operating signal by means of which operation of the brake actuator may be controlled.

## Patentansprüche

1. Verfahren zur Überwachung eines Fahrzeugs unter Verwendung eines Sensors zur Messung eines Parameters, der von den Kräften abhängt, die auf das Fahrzeug einwirken und generell normal für die Oberfläche sind, über die das Fahrzeug fährt, wobei der Sensor ein Drucksensor oder ein Abstandssensor oder Beschleunigungsmesser ist, wobei ein Signal in regelmäßigen Intervallen vom Sensor an ein Verarbeitungsgerät (16) übertragen wird, wobei das Verarbeitungsgerät (16) eine Mehrzahl besagter Signale verarbeitet, um einen Wert festzustellen, der indikativ für die kumulativen Kräfte ist, die auf das Fahrzeug einwirken und generell normal für die Oberfläche sind, über die das Fahrzeug über einen festgelegten Zeitraum fährt, **dadurch gekennzeichnet, dass** das Verfahren ferner die Schritte der Verarbeitung des besagten Signals zu einem Kraftsignal und der Zuordnung jedes Kraftsignals zu einem einer Mehrzahl von Bändern beinhaltet, wobei jedes der Bänder durch einen unterschiedlichen Bereich von Kraftwerten definiert ist und bei jedem festgestellten Kraftsignal ein Zähler (RCC) um einen unterschiedlichen Betrag gemäß dem Band, dem das Kraftsignal zugeordnet wird, inkrementiert wird, wobei der Zähler (RCC) eine Anzeige des Geländes liefert, über welches das Fahrzeug gefahren ist.

2. Verfahren nach Anspruch 1, wobei das Fahrzeug ein Aufhängungssystem beinhaltet, das Signal ein Aufhängungsauslenkungssignal umfasst, das die Auslenkung eines Fahrzeugaufhängungselements relativ zu einem Chassis des Fahrzeugs repräsentiert, und das Verfahren ferner die Schritte der Verwendung eines Fahrzeuggeschwindigkeitssignals zur Feststellung dessen, ob das Fahrzeug stationär ist, und der Verwendung eines Aufhängungsauslenkungssignals beinhaltet, das erzeugt wird, wenn das Fahrzeug stationär ist, um einen statischen Aufhängungsauslenkungswert festzustellen.

3. Verfahren nach Anspruch 2, wobei das Verfahren ferner die Schritte der Verarbeitung von Aufhängungsauslenkungssignalen beinhaltet, die ermittelt werden, während das Fahrzeug in Bewegung ist, um einen statischen Aufhängungsauslenkungswert festzustellen, der die Aufhängungsauslenkung bei stationärem Fahrzeug repräsentiert.

4. Verfahren nach einem beliebigen vorhergehenden Anspruch, wobei das Verfahren auch die Schritte der Verwendung eines Fahrzeuggeschwindigkeitssignals zur Feststellung dessen, ob das Fahrzeug in Bewegung ist, und der Verarbeitung jedes Signals beinhaltet, das in vorbestimmten Zeitintervallen abgegriffen wird, während das Fahrzeug in Bewegung ist.

5. Verfahren nach Anspruch 3, wobei das Verfahren die Verarbeitung jedes Aufhängungsauslenkungssignals und des statischen Aufhängungsauslenkungswerts beinhaltet, um einen relativen Aufhängungsauslenkungswert festzustellen, wobei der relative Aufhängungsauslenkungswert die Größenordnung der Differenz zwischen dem Aufhängungsauslenkungswert und dem statischen Aufhängungsauslenkungswert aufweist.

6. Verfahren nach Anspruch 1, wobei keine Maßnahmen zum Inkrementieren des Zählers ergriffen werden, wenn entweder die Fahrzeugbelastung unter einem vorbestimmten Niveau ist oder das Fahrzeug bremst.

7. Elektronisches Verarbeitungsgerät für ein Fahrzeug, wobei das elektronische Verarbeitungsgerät Verarbeitungsmittel, eine Speichereinrichtung und einen Eingang zur Entgegennahme eines ersten Eingangssignals von einem Sensor aufweist, wobei der Sensor ein Drucksensor oder ein Abstandssensor oder ein Beschleunigungsmesser ist, wobei das erste Eingangssignal einen Messwert eines Parameters repräsentiert, der von der Kraft abhängt, die auf das Fahrzeug einwirkt und generell normal für die Oberfläche ist, über die das Fahrzeug fährt, wobei das elektronische Verarbeitungsgerät dafür konfiguriert ist, das erste Eingangssignal, das während des Betriebs des Fahrzeugs in regelmäßigen Intervallen abgegriffen wird, zu verarbeiten und davon einen Wert abzuleiten, der indikativ für die kumulativen Kräfte ist, die auf das Fahrzeug einwirken und generell normal für die Oberfläche sind, über die das Fahrzeug während eines festgelegten Zeitraums fährt, **dadurch gekennzeichnet, dass** das elektronische Verarbeitungsgerät ferner dafür konfiguriert ist, besagtes erstes Eingangssignal zu einem Kraftsignal zu verarbeiten und jedes Kraftsignal einer Mehrzahl von Bändern zuzuordnen, wobei jedes der Bänder durch einen unterschiedlichen Bereich von Kraftwerten definiert ist und bei jedem festgestellten Kraftsignal ein Zähler (RCC) um einen unterschiedlichen Betrag gemäß dem Band, dem das Kraftsignal zugeordnet wird, inkrementiert wird, wobei der Zähler (RCC) einen Wert liefert, der für das Gelände indikativ ist, über welches das Fahrzeug gefahren ist.

8. Elektronisches Verarbeitungsgerät nach Anspruch 7, wobei das erste Eingangssignal die Auslenkung eines Fahrzeugaufhängungselements relativ zu einem Chassis des Fahrzeugs repräsentiert und das Gerät betätigbar ist, um das erste Eingangssignal zu verarbeiten, während das Fahrzeug in Bewegung ist, um ein statisches Aufhängungsauslenkungssignal festzustellen, das für die Aufhängungsauslenkung bei stationärem Fahrzeug repräsentativ ist.

9. Elektronisches Verarbeitungsgerät nach einem beliebigen Anspruch 7 oder 8, wobei das elektronische Verarbeitungsgerät ferner einen zweiten Eingang für ein zweites Eingangssignal beinhaltet, das die Geschwindigkeit des Fahrzeugs repräsentiert, wobei das elektronische Verarbeitungsgerät imstande ist, das zweite Eingangssignal zur Feststellung dessen zu verwenden, ob sich das Fahrzeug bewegt, und dafür konfiguriert ist, das erste Eingangssignal in regelmäßigen Intervallen zu verarbeiten, um den Wert nur dann festzustellen, wenn sich das Fahrzeug bewegt.

10. Elektronisches Verarbeitungsgerät nach Anspruch 9, wobei das elektronische Verarbeitungsgerät imstande ist, das zweite Eingangssignal zur Feststellung dessen zu verwenden, wann das Fahrzeug stationär ist, wobei das erste Eingangssignal aufgezeichnet wird, wenn das Fahrzeug stationär ist, und dies als statisches Aufhängungsauslenkungssignal designiert wird.

11. Elektronisches Verarbeitungsgerät nach Anspruch 10, wobei das elektronische Verarbeitungsgerät so konfiguriert ist, dass es das statische Aufhängungsauslenkungssignal und das erste Eingangssignal zu einem bestimmten Zeitpunkt benutzt, um einen Wert festzustellen, der für die Auslenkung der Aufhängung aus einer neutralen, bei stationärem Fahrzeug erreichten Position repräsentativ ist.

12. Fahrzeugaufhängungsbaugruppe einschließlich einer Achse und eines Aufhängungselements zum Tragen eines Fahrzeugchassis auf der Achse, wobei die Baugruppe ferner ein elektronisches Verarbeitungsgerät nach einem beliebigen der Ansprüche 7 bis 11 beinhaltet.

13. Fahrzeugaufhängungsbaugruppe nach Anspruch 12, wobei das erste Eingangssignal ein Signal umfasst, das die Auslenkung des Aufhängungselements relativ zum Fahrzeugchassis repräsentiert und das Aufhängungselement eine Fluidfeder umfasst und die Baugruppe ferner einen Drucksensor beinhaltet, der mit dem Eingang des elektronischen Verarbeitungsgeräts verbunden und so angeordnet ist, dass der elektronischen Verarbeitungseinheit, als erstes Eingangssignal, ein Signal geliefert wird, das für den Druck der Flüssigkeit in der Fluidfeder repräsentativ ist.

14. Fahrzeugaufhängungsbaugruppe nach Anspruch 12, wobei die Baugruppe ferner einen Beschleunigungsmesser beinhaltet, der so angeordnet ist, dass der elektronischen Verarbeitungseinheit, als erstes Eingangssignal, ein Signal geliefert wird, das für eine Beschleunigung des Beschleunigungsmessers repräsentativ ist.

15. Fahrzeugaufhängungsbaugruppe nach Anspruch 12 oder 13, wobei die Baugruppe ferner eine Bremse und einen Bremszylinder beinhaltet, wobei das elektronische Verarbeitungsgerät einen Ausgang für ein Bremsenbetätigungssignal aufweist, mittels dem die Betätigung des Bremszylinders gesteuert werden kann.

## Revendications

1. Procédé de surveillance d'un véhicule au moyen d'un capteur pour mesurer un paramètre qui dépend des forces agissant sur le véhicule généralement normal à la surface sur laquelle le véhicule circule, le capteur étant un capteur de pression ou un capteur de distance ou un accéléromètre, transmettant un signal du capteur à un appareil de traitement (16) à des intervalles périodiques, l'appareil de traitement (16) traitant une pluralité desdits signaux pour déterminer une valeur révélatrice des forces cumulées agissant sur le véhicule généralement normal à la surface sur laquelle le véhicule circule pendant une période donnée, le procédé étant **caractérisé en ce qu'**il comprend en outre les étapes consistant à traiter ledit signal en un signal de force et à attribuer chaque signal de force à une bande d'une pluralité de bandes, chacune des bandes étant définie par une plage différente de valeurs de force, et pour chaque signal de force déterminé, à incrémenter un compteur (RCC) d'une quantité différente selon la bande à laquelle le signal de force est attribué, le compteur (RCC) fournissant une indication du terrain sur lequel le véhicule a circulé.

2. Procédé selon la revendication 1, dans lequel le véhicule comprend un système de suspension, le signal comprend un signal d'affaissement de suspension représentant l'affaissement d'un élément de suspension du véhicule par rapport au châssis du véhicule, le procédé comprenant en outre les étapes consistant à utiliser un signal de vitesse du véhicule pour déterminer si le véhicule est stationnaire, et à utiliser un signal d'affaissement de suspension produit quand le véhicule est stationnaire pour déterminer une valeur d'affaissement de suspension statique.

3. Procédé selon la revendication 2, le procédé comprenant en outre les étapes consistant à traiter les signaux d'affaissement de suspension obtenus pendant que le véhicule est en mouvement afin de déterminer une valeur d'affaissement de suspension statique représentant l'affaissement de la suspension quand le véhicule est stationnaire.

4. Procédé selon l'une quelconque des revendications précédentes, le procédé comprenant en outre les étapes consistant à utiliser un signal de vitesse du véhicule pour déterminer si le véhicule est en mouvement, et à traiter chaque signal prélevé à des intervalles de temps prédéterminés pendant que le véhicule est en mouvement.

5. Procédé selon la revendication 3, le procédé consistant à traiter chaque signal d'affaissement de suspension et la valeur d'affaissement de suspension statique afin de déterminer une valeur d'affaissement de suspension relative, la valeur d'affaissement de suspension relative étant la grandeur de la différence entre la valeur d'affaissement de suspension et la valeur d'affaissement de suspension statique.

6. Procédé selon la revendication 1, dans lequel aucune étape n'est réalisée pour incrémenter le compteur quand la charge du véhicule est au-dessous d'un niveau prédéterminé, ou quand le véhicule est en train de freiner.

7. Appareil de traitement électronique pour un véhicule, l'appareil de traitement électronique comprenant un moyen de traitement, une mémoire de stockage et une entrée pour recevoir un premier signal d'entrée d'un capteur, le capteur étant un capteur de pression ou un capteur de distance ou un accéléromètre, le premier signal d'entrée représentant une valeur mesurée d'un paramètre qui dépend de la force agissant sur le véhicule généralement normal à la surface sur laquelle le véhicule circule, l'appareil de traitement électronique étant configuré pour traiter le premier signal d'entrée prélevé à des intervalles périodiques pendant le fonctionnement du véhicule et pour déterminer à partir de celui-ci une valeur révélatrice des forces cumulées agissant sur le véhicule généralement normal à la surface sur laquelle le véhicule circule pendant une période donnée, l'appareil de traitement électronique étant **caractérisé en ce qu'**il est en outre configuré pour traiter ledit premier signal d'entrée en un signal de force et pour attribuer chaque signal de force à une bande d'une pluralité de bandes, chacune des bandes étant définie par une plage différente de valeurs de force, et pour chaque signal de force déterminé, à incrémenter un compteur (RCC) d'une quantité différente selon la bande à laquelle le signal de force est attribué, le compteur (RCC) fournissant une valeur indicative du terrain sur lequel le véhicule a circulé.

8. Appareil de traitement électronique selon la revendication 7, dans lequel le premier signal d'entrée représente l'affaissement d'un élément de suspension du véhicule par rapport au châssis du véhicule, et l'appareil permettant de traiter le premier signal d'entrée pendant que le véhicule est en mouvement afin de déterminer un signal d'affaissement de suspension statique représentatif de l'affaissement de la suspension quand le véhicule est stationnaire.

9. Appareil de traitement électronique selon l'une quelconque des revendications 7 et 8, l'appareil de traitement électronique comprenant en outre une deuxième entrée pour un deuxième signal d'entrée représentant la vitesse du véhicule, l'appareil de traitement électronique étant capable d'utiliser le deuxième signal d'entrée pour déterminer si le véhicule est en mouvement, et étant configuré pour traiter le premier signal d'entrée à des intervalles périodiques afin de déterminer la valeur uniquement quand le véhicule est en mouvement.

10. Appareil de traitement électronique selon la revendication 9, l'appareil de traitement électronique étant capable d'utiliser le deuxième signal d'entrée pour déterminer quand le véhicule est stationnaire, d'enregistrer le premier signal d'entrée quand le véhicule est stationnaire et de désigner ce signal comme signal d'affaissement de suspension statique.

11. Appareil de traitement électronique selon la revendication 10, l'appareil de traitement électronique étant configuré de manière à utiliser le signal d'affaissement de suspension statique et le premier signal d'entrée à n'importe quel moment pour déterminer une valeur représentative de l'affaissement de la suspension à partir d'une position neutre obtenue quand le véhicule est stationnaire.

12. Ensemble de suspension de véhicule comprenant un essieu et un élément de suspension pour soutenir un châssis de véhicule sur l'essieu, l'ensemble comprenant en outre un appareil de traitement électronique selon l'une quelconque des revendications 7 à 11.

13. Ensemble de suspension de véhicule selon la revendication 12, dans lequel le premier signal d'entrée consiste en un signal représentant l'affaissement de l'élément de suspension par rapport aux châssis du véhicule, et l'élément de suspension comprend un ressort à fluide, et l'ensemble comprend en outre un capteur de pression connecté à l'entrée de l'appareil de traitement électronique et servant à fournir à l'appareil de traitement électronique, en guise de premier signal d'entrée, un signal représentatif de la pression du fluide dans le ressort à fluide.

14. Ensemble de suspension de véhicule selon la revendication 12, l'ensemble comprenant en outre un accéléromètre servant à fournir à l'appareil de traitement électronique, en guise de premier signal d'entrée, un signal représentatif d'une accélération de l'accéléromètre.

15. Ensemble de suspension de véhicule selon la revendication 12 ou 13, l'ensemble comprenant en outre un frein et un actionneur de frein, l'appareil de traitement électronique comportant une sortie pour un signal de fonctionnement du frein au moyen duquel le fonctionnement de l'actionneur de frein peut être contrôlé.
